# EUROPÄISCHE PATENTSCHRIFT

(11) **EP 1 532 204 B1**
(45) Veröffentlichungstag und Bekanntmachung des Hinweises auf die Patenterteilung: **27.09.2006**
(21) Anmeldenummer: 03792333.1
(22) Anmeldetag: 16.08.2003
(51) Int. Cl.: C08L 59/00

(54) **SCHLAGZÄHE POLYOXYMETHYLEN-FORMMASSEN, IHRE VERWENDUNG UND DARAUS HERGESTELLTE FORMKÖRPER**
IMPACT-RESISTANT POLYOXYMETHYLENE MOULDING COMPOUNDS, USE THEREOF AND MOULDING COMPOUNDS PRODUCED THEREFROM
MATIERES A MOULER POLYOXYMETHYLENE RESILIENTES, LEUR UTILISATION ET CORPS MOULES QU'ELLES PERMETTENT DE REALISER

(30) Priorität: 19.08.2002 DE 10237884
(43) Veröffentlichungstag der Anmeldung: 25.05.2005
(73) Patentinhaber: Ticona GmbH, 65451 Kelsterbach (DE)
(72) Erfinder: PAPKE, Nicolai, 65239 Hochheim am Main (DE)
(86) Internationale Anmeldenummer: PCT/EP2003/009074
(87) Internationale Veröffentlichungsnummer: WO 2004/018558

(56) Entgegenhaltungen:
- EP-A- 0 156 285
- EP-A- 0 565 304
- US-A- 3 642 940
- US-A1- 2001 049 415

## Beschreibung

Die vorliegende Erfindung betrifft schlagzäh modifizierte Polyoxymethylen-Formmassen, die zur Herstellung von Formteilen oder Extrudaten geeignet sind. Die damit hergestellten Produkte weisen verbesserte mechanische Eigenschaften auf.

Seit ihrer Markteinführung haben sich Polyoxymethylene als äußerst nützliche technische Werkstoffe in vielen Anwendungen durchgesetzt. Besonders als Konstruktionswerkstoff im Automobilbau, in der Elektroindustrie und in der Medizintechnik findet Polyoxymethylen breite Anwendung. Dabei wird von Polyoxymethylen-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die veröffentlichten Werte für die Streckspannung liegen zwischen 60 und 70 N/mm². Für den Zug-E-Modul von unmodifizierten Copolymeren findet man Werte zwischen 2400 und 3100 N/mm². Für die Bruchdehnung findet man Werte zwischen 10 und 30 %.

Für eine Reihe von potentiellen Anwendungen weisen Polyoxymethylene allerdings eine zu geringe Schlagzähigkeit auf. Für solche Anwendungen ist es zusätzlich wünschenswert, dass die Produkte auch bei tieferen Umgebungstemperaturen ihre guten Schlagzähigkeitseigenschaften behalten.

Es ist bekannt, dass die Zähigkeit von Polyoxymethylenen durch Zusatz von Schlagzähmodifikatoren verbessert werden kann. Als Schlagzähmodifikatoren werden organische Additive wie vernetzte oder unvernetzte Elastomere oder Pfropfcopolymere aus einem kautschukelastischen, einphasigen Kern und einer harten Pfropfhülle eingesetzt. Schlagzähmodifizierte Polyoxymethylen-Formmassen sind aus der Patentliteratur bekannt, z.B. mit Polyurethanen modifiziertes Polyoxymethylen (DE 1 193 240), mit einer zweiphasigen Mischung aus Polybutadien und Styrol/Acrylnitril (ABS) modifiziertes Polyoxymethylen (DE 1 931 392), mit einem auf Basis Acrylester-Butadien hergestellten Pfropfcopolymer modifiziertes Polyoxymethylen (DE 1 964 156), ein mit modifizierten Polysiloxanen bzw. Silicon-Kautschuken ausgerüstetes Polyoxymethylen (DE 2 659 357) und schließlich mit einem Pfropfcopolymer, das aus einem kautschukelastischen, einphasigen Kern auf Basis von Polydien und einer harten, ein- oder mehrphasigen Pfropfhülle, z.B. aus Poly(alkyl)acrylaten, Poly(alkyl)acrylnitrilen oder Polystyrol, aufgebaut ist, modifiziertes Polyoxymethylen (EP 0156285 B1).

Im Rahmen der allgemein gestiegenen Anforderungen an Materialien sind jedoch oft weiter verbesserte Schlagzähigkeiten und verbesserte mechanische Eigenschaften erforderlich.

Die Aufgabe der vorliegenden Erfindung besteht darin, Polyoxymethylen-Formmassen zur Verfügung zu stellen, die weiter verbesserte Schlagzähigkeiten und mechanische Eigenschaften aufweisen. Diese Formmassen können zu Formteilen mit verbesserten Eigenschaften verarbeitet werden.

Die Aufgabe wird gelöst durch eine Polyoxymethylen Formmasse enthaltend:
(A) 0.1 - 5.0 Gew. % eines Kompatibilisators,
(B) 5 - 50 Gew.-% eines Schlagzähmodifikators,
(C)ad 100 Gew.-% eines Polyoxymethylen Polymeren.

Überraschend wurde gefunden, dass die erfindungsgemäßen Polyoxymethylen Formmassen eine erheblich verbesserte Schlagzähigkeit gegenüber dem bisherigen Stand der Technik besitzen. Insbesondere die Kälteschlagzähigkeit wird durch die vorliegende Erfindung überraschend verbessert.

Die erfindungsgemäße Formmasse enthält 0,1 - 5,0 Gew.-%, bevorzugt 0,2 - 2 Gew.-%, besonders bevorzugt 0,3 bis 1 Gew.-%, insbesondere 0,3 bis 0,6 Gew.-% eines Kompatibilisators, Komponente (A), der eine Mehrzahl von Einheiten der Formel

―(CH₂―CH₂)― (I)

und 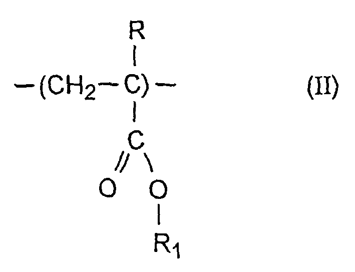 und 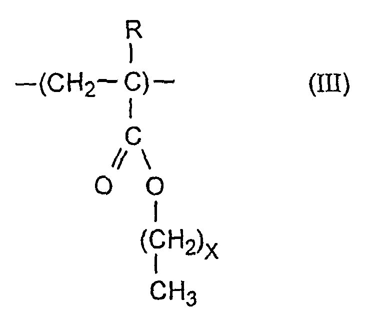 und gegebenenfalls 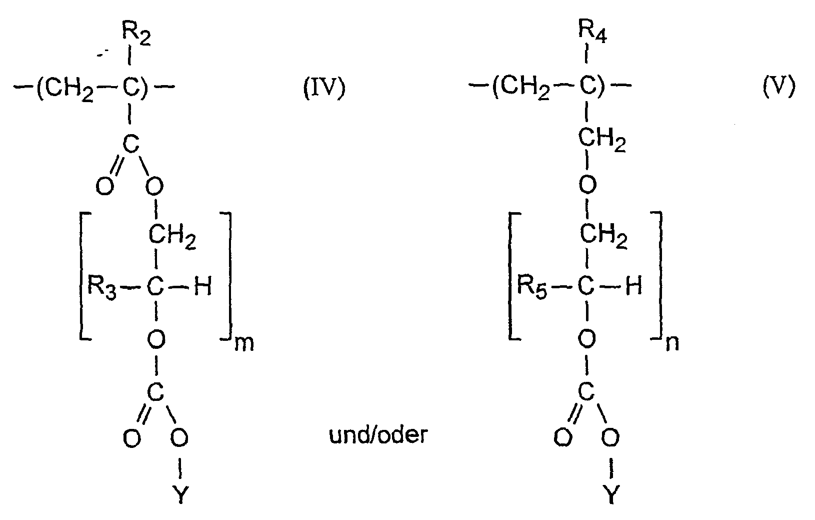 umfasst, in denen
R und R₂ für ein Wasserstoffatom, eine Alkylgruppierung mit 1 oder 2 Kohlenstoffatomen stehen
R₁= 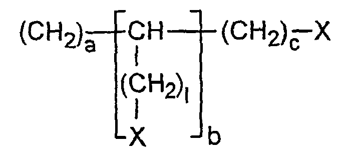 wobei X CH₃ oder 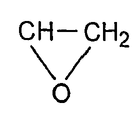 bedeuten und mindestens ein X steht für 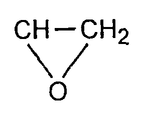 wobei
- a: für eine Zahl von 1 bis 10 steht
- b: gleich 0 oder 1 ist
- c: für eine Zahl von 0 bis 10 steht
- l: für eine Zahl von 0 bis 10 steht
- R₃, R₅: für ein Wasserstoffatom oder eine Methylgruppe stehen
- R₄: für ein Wasserstoffatom oder eine Alkylgruppe mit 1 bis 4 Kohlenstoffatomen steht
- m: für 1 oder 2 steht
- n: für 0 oder 1 oder 2 steht
- x: für eine Zahl von 0 bis 10 steht
- Y: für H oder 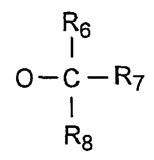 steht
wobei R₆, R₇, gleich oder verschieden, für eine Alkylgruppe mit 1 bis 4 Kohlenstoffatomen stehen, R₈ für eine Alkylgruppe mit 1 bis 12 Kohlenstoffatomen, Phenyl, Alkylphenyl oder Cycloalkyl mit 3 bis 12 Kohlenstoffatomen steht
oder 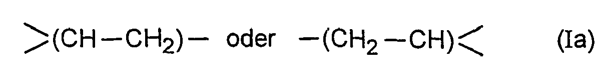 oder 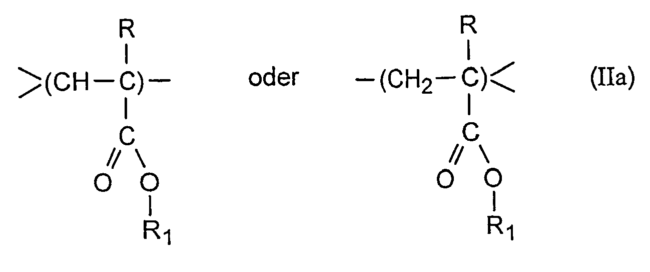 oder 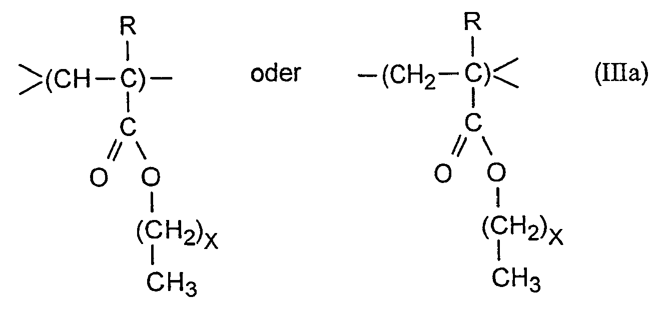 oder 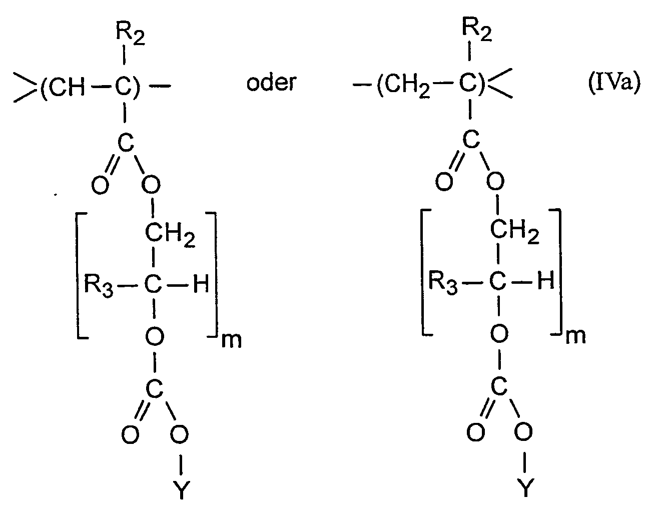 oder 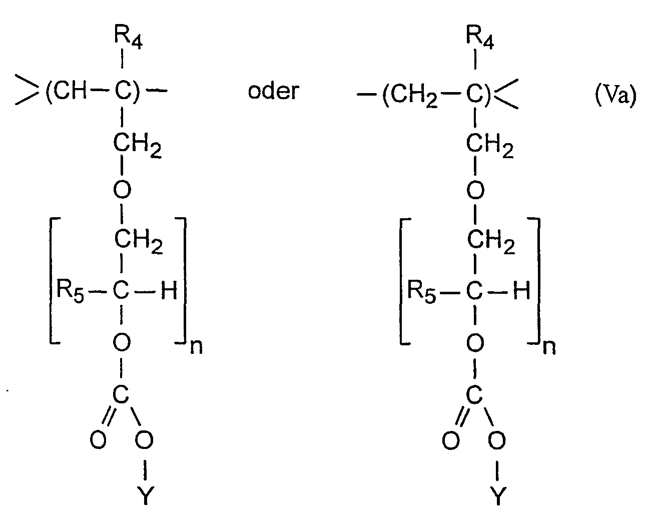 wobei die Einheiten der Formeln (Ia), (IIa), (IIIa), (IVa) und (Va) an Einheiten der Formeln (I), (II), (III), (IV) oder (V) gebunden sein können, wobei der Verträglichmacher enthält
- 29 bis 70 Gew.-% Einheiten der Formel (I)
- 0,5 bis 30 Gew.-% Einheiten der Formel (II)
- 10 bis 70 Gew.-% Einheiten der Formel (III)
- und 0 bis 10 Gew.-% Einheiten der Formel (IV) und/oder (V).

Der erfindungsmäßige Verträglichkeitsvermittler besitzt gewöhnlich ein Molgewicht zwischen 5.000 und 1·10⁸ und vorzugsweise zwischen 1·10⁴ und 1·10⁶.
Als spezielle Beispiele von Vorläufern der Einheiten der Formel (II) kann man Glycidylacrylat-Monomere der Formel 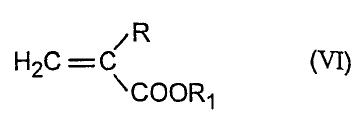 nennen, in der R und R₁ die oben angegebenen Bedeutungen haben. Vorteilhaft verwendet man Glycidylmethacrylat.

Als spezielle Beispiele von Vorläufern der Einheiten der Formel (III) kann man Acrylat-Monomere der Formel 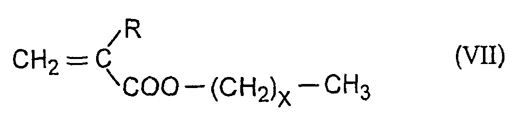 nennen, in der R und x die oben angegebenen Bedeutungen haben.
Vorteilhaft verwendet man Ethylacrylat und Methylmethacrylat.
Als spezielle Beispiele von Vorläufern der Einheiten der Formeln (IV) und (V) kann man die Periode der Formeln 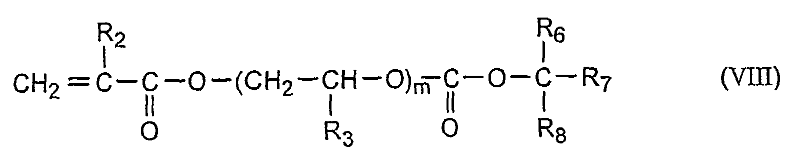 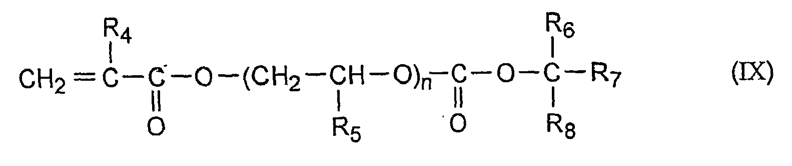 nennen, in denen R₂, R₃, R₄, R₅, R₆, R₇, R₈, m und n die oben angegebenen Bedeutungen haben.

Der erfindungsgemäße Verträglichkeitsvermittler für die Legierung, der die Einheiten der Formel (I), (II) und (III) enthält, kann grundsätzlich nach dem bekannten radikalischen Verfahren zur Copolymerisation unter Hochdruck erhalten werden. Das Verfahren besteht darin, die Vorläufer der besagten Einheiten bei einer Temperatur zwischen 50 und 300° C und unter einem Druck von 500 bis 3.000 bar in Gegenwart von Initiatoren vom organischen Peroxid-Typ umzusetzen. Die Menge an Copolymerisationsinitiatoren liegt zwischen 0,0001 und 0,1 Gew.-% des Gesamtgewichts der Ausgangsmonomeren.

Wenn der Verträglichkeitsvermittler der erfindungsgemäßen Legierung auch Einheiten der Formel (IV) und/oder (V) enthält, wird er im Prinzip nach dem Verfahren erhalten, das darin besteht:
a. ein Copolymer herzustellen, das Einheiten der Formel (I) und (II) oder (III) oder ein Terpolymer enthält, das die Einheiten (I) und (II) und (III) enthält, nach dem bekannten Verfahren zur Radikalpolymerisation unter hohem Druck,
b. das so erhaltene Polymer in einem auf eine Temperatur zwischen 60 und 85° C gehaltenen Reaktor über mehrere Stunden mit einer Lösung zusammenzubringen, die das (die) Monomere(n) der Formel (VI) und/oder (VII), das (die) Monomere(n) der Formel (VIII) und/oder (IX), ein die Polymerisation startendes Peroxid und einen Kettenüberträger enthält,
c. das so erhaltene, mit Wasser gewaschene und danach getrocknete Produkt einer Behandlung in einem auf etwa 200° C gebrachten Extruder zu unterwerfen.

Als Komponente (B) eingesetzt werden 5-50 Gew.-%, bevorzugt 5 bis 40 Gew.-%, besonders bevorzugt 7 bis 30 Gew.-% eines Schlagzähmodifikators. Als Schlagzähmodifikator einsetzbar sind einzeln oder als Gemisch Polyurethane, zweiphasige Mischungen aus Polybutadien und Styrol/Acrylnitril (ABS), modifizierte Polysiloxane bzw. Silicon-Kautschuke oder Pfropfcopolymere aus einem kautschukelastischen, einphasigen Kern auf Basis von Polydien und einer harten Pfropfhülle (Kern-Hüllen- bzw. Core-Shell-Struktur). Im letzteren Fall besteht Komponente (B) aus Partikeln, die überwiegend, vorzugsweise zu mehr als 70 % eine Kern-Hüllen-Struktur aufweisen. Dabei wird der Kern von einer kautschukelastischen Polymerphase gebildet, auf die die harte Hülle, die auch aus mehreren Schichten bestehen kann, aufgepfropft ist. Der Kern ist bevorzugt einphasig, das heißt, dass der Kern überwiegend, vorzugsweise vollständig, aus der kautschukelastischen Weichphase besteht und nur in geringen Mengen, vorzugsweise keine, Einschlüsse aus harten Polymerbestandteilen der Hülle enthält. Das Pfropfcopolymer besteht meist zu 40 bis 95 Gew.-%, vorteilhaft zu 60 bis 90 Gew.-%., besonders vorteilhaft zu 70 bis 80 Gew.-% aus dem kautschukelastischen Kern. Der Anteil der Hülle (Schalen) beträgt 5 bis 60 Gew.-%, vorteilhaft 10 bis 40 Gew.-%, besonders vorteilhaft 20 bis 30 Gew.-%. Der Kern besteht im Allgemeinen aus Polydienen, wie z. B. Polybutadien oder Polyisopren und kann bis zu 10 Gew.-%, vorteilhaft bis zu 5 Gew.-%, an Comonomer-Einheiten enthalten. Als Comonomer lassen sich vorteilhaft Styrol oder Acrylnitril einsetzen. Das Kernpolymer kann auch vernetzt sein und einen Gelanteil, gemessen in Toluol, von im Allgemeinen größer als 70 % und vorzugsweise größer als 80% besitzen. Als Vernetzer läßt sich zum Beispiel Divinylbenzol einsetzen. Die Hülle der Partikel besteht aus harten Polymeren, welche auf den Kern als Pfropfsubstrat aufgepfropft sind. Dabei kann die Hülle ein- oder mehrschalig, vorteilhaft zweischalig, ausgebildet sein. Bei mehr als einer Hülle bestehen die unterschiedlichen Schichten vorteilhaft aus unterschiedlichen Polymeren oder Copolymeren. Vorteilhaft ist hierbei die erste Schicht vernetzt. Gegebenenfalls können aber auch die übrigen Schichten vernetzt sein. Als Monomere, die zu geeigneten Polymeren der Partikelhülle führen, sind beispielsweise ungesättigte Nitrile, Acrylate, Methacrylate, Vinylester, Styrolderivate geeignet, vorteilhaft sind Acrylnitril, Methacrylnitril, Acrylate und Methacrylate mit einer Alkoholkomponente, die 1 bis 6, bevorzugt 1 bis 4 Kohlenstoffatome aufweist, wie zum Beispiel Methylacrylat, Ethylacrylat, Propylacrylat, n-Butylacrylat, Methylmethacrylate, Ethylmethacrylat, Propylmethacrylat, Butylmethacrylat, tert.-Butylmethacrylat. Als Vinylester vorteilhaft einsetzbar sind außerdem Vinylacetat, Vinylether, N-Vinyl-N-methylacetamid, Vinylpyrrolidon, als Styrolderivate können beispielsweise Styrol, α-Methylstyrol und Vinyltoluol vorteilhaft eingesetzt werden. Zum Aufbau der Hülle können auch Copolymere aus mindestens zwei der vorgenannten Monomergruppen und Monomere eingesetzt werden, insbesondere Copolymere der genannten Styrolderivate mit den übrigen Monomeren. Besonders vorteilhaft sind Copolymere die aus einer Mischung enthaltend 20 bis 80 Gew.-% Acrylnitril oder Methacrylnitril mit 80 bis 20 Gew.-% der übrigen genannten Monomere, insbesondere Acrylate, Methacrylate und Vinylester, hergestellt werden wurden. Bevorzugt sind außerdem Pfropfpolymerisate, die einen zweischaligen Hüllenaufbau besitzen, wobei die erste Schale aus Polystyrol, die zweite, äußere Schale aus einem Poly(meth)acrylat, welches besonders bevorzugt teilweise vernetzt ist. Als vernetzende Monomere können prinzipiell alle hierfür geeigneten Verbindungen eingesetzt werden wie multifunktionelle Olefine, beispielsweise Divinylbenzol, Ethylenglykoldimethacrylat, Butylenglykoldimethacrylat, oder auch Triallylcyanurat.

Die Glastemperaturen, der vorstehend beschriebenen Komponente (B) liegt erfindungsgemäß zwischen -40 °C und -120 °C, bevorzugt unterhalb von -60 °C, insbesondere zwischen -80 °C und -120 °C. Die Herstellung der als Komponente (B) einsetzbaren Pfropfcopolymeren mit Kern-Hülle-Struktur ist bekannt und kann durch Einstufenpolymerisation im Falle einer einschaligen Hülle oder durch Mehrstufenpolymerisation im Falle einer mehrschaligen Hülle erfolgen, wie zum Beispiel in der Patentschrift US 3985704 beschrieben, worauf Bezug genommen wird. Die Pfropfcopolymerisation wird mittels wasserlöslicher Initiatoren oder mittels aktivierter Initiatorsysteme, deren eine Komponente zumindest wasserlöslich ist durchgeführt, wie zum Beispiel beschrieben in C.B. Bucknall, "Toughened Plastics", Seite 98, Applied Science Publisher LTD, 1977 (London). Bei der ein- oder mehrstufigen Pfropfcopolymerisation geht man von einem Polydien aus, das vorzugsweise in Form eines wäßrigen Latex mit definierter mittlerer Teilchengröße, besonders bevorzugt im Bereich von 0,1 bis 5 µm vorliegt und welches ganz besonders bevorzugt partiell vernetzt ist.

Zur Herstellung polymerisiert man das Monomer oder das Monomergemisch in Gegenwart des Polydiens, wobei der überwiegende Teil der Monomeren auf die Polydienpartikel aufgepfropft wird. Die Menge an Polydien beträgt im Allgemeinen 40 bis 95 Gew.-% und die Menge des Monomeren oder Monomergemisches 5 bis 60 Gew.-%, jeweils bezogen auf die Gesamtmenge. Die erreichte Pfropfausbeute bewegt sich zwischen 60 und 95 %, vorzugsweise zwischen 80 und 90 %. Die Pfropfpolymerisation wird in Lösung oder Emulsion, bevorzugt in wäßriger Dispersion durchgeführt. Hierzu wird der feinteilige Polydienlatex unter Zusatz der üblichen Polymerisationshilfsstoffe wie Emulgier- bzw. Suspendierhilfsmittel, Radikalinitiatoren, Regler etc. vorgelegt, das Monomere oder die Monomermischung zugegeben und bei Temperaturen zwischen 30 und 95°C, vorzugsweise 50 bis 80 °C polymerisiert. Im Falle einer Einstufenreaktion ist der Initiator wasserlöslich. Als Initiatoren lasen sich beispielsweise wasserlösliche Peroxide, Perkarbonate oder Perborate einsetzen. Bei einem Mehrkomponenten-Initiatorsystem (Redoxsystem) muß zumindest eine Komponente wasserlöslich sein. Als Beispiel für Emulgatoren, auch Dispergatoren genannt, lassen sich aliphatische und aromatische Sulfate, Sulfonate, Salze von Carbonsäuren, wie zum Beispiel Dresinate, verwenden. Die hierfür geeigneten Verbindungen sind dem Fachmann allgemein bekannt.

Bei einer Mehrstufenreaktion erfolgt die Pfropfpolymerisation und die Aufarbeitung im Allgemeinen wie in US 3985704 beschrieben. Zur Ausbildung einer mehrschaligen Hülle wird zunächst ein Monomer oder eine Monomermischung, beispielsweise Styrol, auf das Kernpolymer, beispielsweise Butadien-StyrolCopolymer, aufgepfropft und danach ein anderes Monomer oder Monomerengemisch eingesetzt, gegebenenfalls in Anwesenheit eines Vernetzers. Die mittlere Teilchengröße der Partikel beträgt zweckmäßigerweise 0.1 bis 5 µm.

Als Komponente (B) einsetzbare Pfropfcopolymere sind auch Materialien verwendbar, bei der der Kern überwiegend oder vollständig aus vorzugsweise teilvernetzten Polyacrylsäureestern oder Polymethacrylsäureestern besteht, deren Alkoholkomponente 1 bis 15 Kohlenstoffatome, vorzugsweise 1 bis 8 Kohlenstoffatome enthält. Als Comonomere kommen olefinische Monomere in Frage, vorteilhaft Butadien, Cyclooctadien, Vinylether und Halogenalkylacrylate. Der Gelanteil, gemessen in Toluol, beträgt bevorzugt mindestens 50%, besonders bevorzugt mindestens 70%. Für die Pfropfhülle können die oben beschriebenen Monomeren und Monomerengemische eingesetzt werden. Auch die Teilchengrößen liegen im gleichen Bereich. Pfropfpolymere auf Basis von Polyacrylsäureestern und Polymethacrylsäureestern sind zum Beispiel beschrieben in DE 1964156, DE 2116653, EP 50265, EP 60601 und EP 64207, worauf Bezug genommen wird. Der Kern des Pfropfpolymeren kann auch vollständig oder teilweise aus einem Silikonkautschuk und/oder unvernetzten Organopolysiloxanen bestehen. Auf diesen Kern, der vorzugsweise pfropfaktive funktionelle Gruppen enthält, können die weiter oben beschriebenen Monomere und/oder Monomergemische aufgepfropft werden. Diese Materialien sind beispielsweise in DE 2659357 beschrieben, worauf Bezug genommen wird. Die Komponente (B) enthält vorzugsweise, insbesondere wenn der Kern des Pfropfpolymeren aus teilvernetzten Polyacrylsäureestern oder Polymethacrylsäureestern besteht, ein Verdünnungsmittel. Das Verdünnungsmittel ist eine niedrig schmelzende, vorteilhaft polymere Substanz, die in der Schmelze mit den als Schlagzähmodifikator eingesetzten Pfropfpolymeren gut mischbar ist. Besonders vorteilhaft ist der Einsatz dieses Verdünnungsmittels, wenn die Pfropfpolymeren so stark vernetzt sind, dass diese sich nicht mehr im Verdünnungsmittel lösen, sich ein Zweiphasensystem bildet und die Grenzflächenspannung eine feine Verteilung der Pfropfpolymeren im Verdünnungsmittel zuläßt. Bevorzugt befindet sich das Pfropfpolymere überwiegend im Randbereich des Zweiphasensystems. Bei zunehmender Menge an Pfropfpolymer findet sich dieses auch zunehmend im Kern und mit weiter zunehmender Menge des Pfropfpolymeren auch außerhalb des Zweiphasensystems im Matrixpolymeren, der Komponente (C). Ganz besonders vorteilhaft ist eine gleichmäßige Verteilung des Zweiphasensystems und des Pfropfpolymeren in der Komponente (C), insbesondere wenn sich das Pfropfpolymere überwiegend am Rand des Zweiphasensystems befindet. Der Schmelzpunkt des Verdünnungsmittels sollte kleiner 250°C, bevorzugt 180 bis 210°C betragen. Die Menge des Verdünnungsmittels liegt bei 10 bis 95%, vorteilhaft bei 30 bis 70%, besonders vorteilhaft bei 40 bis 60%, bezogen auf die Summe aus Pfropfpolymer und Verdünnungsmittel. Ganz besonders vorteilhaft einsetzbar als Verdünnungsmittel sind Polyurethane, segmentierte Copolyester und Ethylen-Vinylacetat-Copolymere. Weitere geeignete Verdünnungsmittel sind dem Fachmann bekannt und beispielsweise beschrieben in DE 2818240 und DE 2523991, worauf Bezug genommen wird. Das Verdünnungsmittel kann vorteilhaft vor der Zugabe zur Komponente (C) mit dem Pfropfpolymeren gemischt werden.

Als Schlagzähkomponente, Komponente (B), sind vorteilhaft außerdem Polyurethane, vorzugsweise thermoplastische Polyurethane einsetzbar. Bei den erfindungsgemäß einsetzbaren Polyurethanen handelt es sich um bekannte Produkte, die beispielsweise in DE 1193240, DE 2051028 und im Kunststoff-Taschenbuch, (Saechtling, 27. Ausgabe, Hanser Verlag 1998) auf den Seiten 523 bis 542 beschrieben sind, worauf Bezug genommen wird. Sie werden in bekannter Weise durch Polyaddition aus Polyisocyanaten, insbesondere Diisocyanaten, Polyestern, Polyethern, Polyesteramiden, Polyacetalen oder anderen geeigneten Hydroxy- bzw. Aminoverbindungen, wie beispielsweise hydroxyliertem Polybutadien, oder Mischungen aus den vorgenannten Verbindungen hergestellt. Gegebenenfalls werden auch Kettenverlängerer wie niedermolekulare Polyole, insbesondere Diole, Polyamine, insbesondere Diamine oder Wasser eingesetzt.

Geeignete Diisocyanate sind beispielsweise Diisocyanate der allgemeinen Formel (X)

OCN-R₉-NCO (X)

wobei R₉ ein zweiwertiger, geradkettiger oder verzweigter aliphatischer Rest mit 1 bis 20, vorzugsweise 2 bis 12 Kohlenstoffatomen oder ein zweiwertiger cycloaliphatischer Rest mit 4 bis 20, vorzugsweise 6 bis 15 Kohlenstoffatomen oder ein zweiwertiger, substituierter oder unsubstituierter aromatischer Rest mit 6 bis 25, vorzugsweise 6 bis 15 Kohlenstoffatomen ist. Gegebenenfalls kann der Rest R₉ auch ein aromatischer Rest sein, wie beispielsweise Toluylen-2,4-diisocyanat, Toluylen-2,6-diisocyanat oder deren Mischungen, Naphthylen-1,5-diisocyanat, Diphenylmethan-4,4'-diisocyanate (MDI oder PMDI), einzeln oder als Gemisch.

Als zweiwertiger aliphatischer Rest kommt zum Beispiel der Alkylidenrest -(CH₂)ₙ- mit n = 2 bis 12 in Frage, wie Ethyliden-, Propyliden-, Pentamethylen-, Hexamethylen- und dergleichen oder der 2-Methylpentamethylen-, der 2,2,4-Trimethyl-hexamethylen- oder der 2,4,4-Trimethylhexamethylenrest. Diisocyanate diesen Typs, die besonders bevorzugt werden, sind das Hexamethylen-diisocyanat, sowie 2,2,4- und 2,4,4-Trimethylhexamethylendiisocyanat.

Wenn R₉ in obiger Formel I einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

R₉ kann in obiger Formel I auch eine Kombination von zweiwertigen offenkettigen aliphatischen und cycloaliphatischen Resten darstellen und beispielsweise die Bedeutung 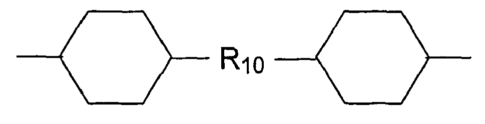 haben, worin R₁₀ einen gesättigten, geradkettigen oder verzweigten aliphatischen Rest mit 1 bis 8, vorzugsweise 1 bis 3 Kohlenstoffatomen bedeutet. Die beiden Ringe stehen hier vorzugsweise für das unsubstituierte Cyclohexan, während R₁₀ vorzugsweise die Methylen-, Ethylen-, Methylmethylen- oder Dimethylmethylengruppe bedeutet.

Falls R₉ einen offenkettigen zweiwertigen Rest darstellt, so steht er vorzugsweise für einen unverzweigten Alkylidenrest -(CH₂)ₙ- mit n= 2 bis 12. Beispiele hierfür sind der Ethyliden-, Propyliden-, Pentamethylen- und der Hexamethylenrest sowie der 2-Methylpentamethylen-, der 2,2,4-Trimethyl-hexamethylen- oder der 2,4,4-Trimethylhexamethylenrest. Diisocyanate dieses Typs, die besonders bevorzugt werden, sind das Hexamethylen-diisocyanat sowie 2,2,4- und 2,4,4-Trimethylhexamethylendiisocyanat.

Wenn R₉ in der obigen Formel (X) einen zweiwertigen aromatischen Rest darstellt, so ist dies bevorzugt der Toluol-, Diphenylmethan-, Phenylen- oder Naphthalinrest. Beispiele für entsprechende Diisocyanate sind: 2,4-Toluoldiisocyanat, 2,6-Toluoldiisocyanat, Diphenyl-methan-4,4'-diisocyanat, 3,3'-Dimethyldiphenylmethan-4,4'-diisocyanat, 3,3'Dimethyl-4,4,'-diphenylen-diisocyanat (3,3'-Bitoluol-4,4'-diisocyanat), m-Phenylen-diisocyanat, p- Phenylen-diisocyanat, o- Phenylen-diisocyanat, Chlorphenylen-2,4-toluoldiisocyanat, 3,3'-Dichlordiphenyl-4,4'-diisocyanat, 4-Chlor-1,3-phenylendiisocyanat, 1,5-Naphthalindiisocyanat und 1,4-Naphthalindiisocyanat.

Wenn R₉ in obiger Formel (X) einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

Die Diisocyanate der Formel (X) können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten z.B. Umsetzung mit Phenol oder Caprolactam erhält.

Als aliphatische Polyhydroxylverbindungen kommen Polyether, wie Polyethylenglykolether, Polypropylenglykolether, und Polybutylenglykolether, Poly-1,4-butandiolether oder Mischpolyether aus Ethylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den vorzugsweise verwendeten aliphatischen Polyestern handelt es sich im Wesentlichen um unvernetzte Polyester mit Molekulargewichten von 500 bis 10000, vorzugsweise von 500 bis 5000. Hinsichtlich der Säurekomponente leiten sie sich von unverzweigten und/oder verzweigten aliphatischen Dicarbonsäuren ab, wie z.B. Dicarbonsäuren der allgemeinen Formel

HOOC - (CH₂)p - COOH

mit p= 0 bis 20, vorzugsweise 4 bis 10, insbesondere Adipinsäure und Sebazinsäure. Auch cycloaliphatische Dicarbonsäuren, wie Cyclohexandicarbonsäuren sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z.B. Diole der allgemeinen Formel

HO - (CH₂)_{q} - OH

in Betracht, in der q=2 bis 12, vorzugsweise 2 bis 6 bedeutet. Genannt seien hier insbesondere 1,4-Butandiol, 1,6-Hexandiol und 2,2,-Dimethylpropandiol-1,3 sowie Diethylenglykol. Auch cycloaliphatische Diole, wie Bis-hydroxymethyl-cyclohexan, oder Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die erfindungsgemäß eingesetzten Polyurethane sind vorzugsweise thermoplastisch und damit vorzugsweise im wesentlichen unvernetzt, das heißt wiederholt ohne nennenswerte Zersetzungserscheinungen schmelzbar. Ihre reduzierten spezifischen Viskositäten, gemessen bei 30°C in Dimethylformamid, liegen in der Regel bei 0,5 bis 3 dl/g, vorzugsweise bei 1-2 dl/g. Die Werte für die Reißdehnungen betragen zweckmäßigerweise 300 bis 1500 %, vorzugsweise mehr als 400 bis 1500 %, während die Shore-Härte A bei höchstens 100, vorteilhaft nicht über 85, vorzugsweise zwischen 60 und 90, besonders bevorzugt zwischen 70 und 89, insbesondere zwischen 75 und 85 und die Glastemperaturen zumeist nicht höher als 0°C, vorteilhaft nicht höher als -10°C, besonders vorteilhaft nicht höher als -20°C liegen.

Die als Basismaterial für die erfindungsgemäßen Formmassen verwendeten Polyoxymethylenpolymere (C) können Polyoxymethylenhomo- oder copolymere sein. Derartige Polymere sind dem Fachmann bekannt und in der Literatur beschrieben. Die Homopolymere werden im allgemeinen durch Polymerisation von Formaldehyd oder Trioxan hergestellt, wobei die Polymerisation kationisch oder anionisch initiiert werden kann. Bevorzugt sind jedoch Polyoxymethylencopolymere, die neben Oxymethyleneinheiten noch Oxyalkyleneinheiten enthalten, wobei die Alkylengruppen 2 - 8 Kohlenstoffeinheiten, linear oder verzweigt, enthalten können. Bei den Polyoxymethylenen (POM), wie sie beispielsweise in der DE-A 29 47 490 beschrieben sind, handelt es sich im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und - cyclischen Ethern, cyclischen Acetalen und/oder linearen Polyacetalen.

Derartige Polyoxymethylenhomo- oder Copolymerisate sind dem Fachmann an sich bekannt und in der Literatur beschrieben. Ganz allgemein weisen diese Polymere mindestens 50 mol-% an wiederkehrenden Einheiten -CH₂O in der Polymerhauptkette auf. Die Homopolymeren werden im allgemeinen durch Polymerisation von Formaldehyd oder Trioxan hergestellt, vorzugsweise in der Gegenwart von geeigneten Katalysatoren. Besonders geeignete Katalysatoren sind beispielsweise Bortrifuorid und Trifluormethansulfonsäure.

Im Rahmen der Erfindung werden Polyoxymethylencopolymere als Komponente (C) bevorzugt, insbesondere solche, die neben den wiederkehrenden Einheiten -CH₂O-noch bis zu 50, vorzugsweise von 0.1 bis 20 und insbesondere 0.5 bis 10 mol-% an wiederkehrenden Einheiten 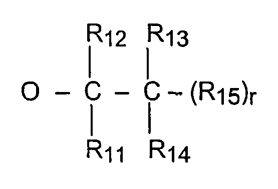 enthalten, wobei R₁₁ bis R₁₄ unabhängig voneinander ein Wasserstoffatom, eine C₁- bis C₄-Alkylgruppe oder eine halogensubstituierte Alkylgruppe mit 1 bis 4 C-Atomen und R₁₅ eine - CH₂-, -CH₂O- eine C₁- bis C₄ - Alkyl- oder C₁- bis C₄-Haloalkyl-substituierte Methylengruppe oder eine entsprechende Oxymethylengruppe darstellen und r einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 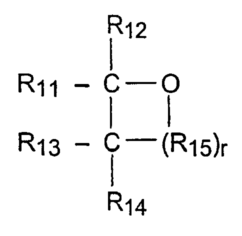 wobei R₁₁ bis R₁₅ und r die obengenannte Bedeutung haben. Als Beispiele seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Besonders vorteilhaft sind Copolymere aus 99,5 - 95 Mol-% Trioxan und 0,5 bis 5 mol-% einer der vorgenannten Comonomere.

Als Komponente (C) ebenfalls geeignet sind Oxymethylenterpolymerisate, die beispielsweise durch Umsetzung von Trioxan, einem der vorstehend beschriebenen cyclischen Ether und mit einem dritten Monomeren, vorzugsweise einer bifunktionellen Verbindung der Formel 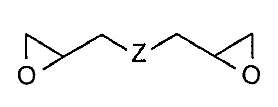 wobei Z eine chemische Bindung, -O- oder -ORO- (R = C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Polyoxymethylenhomo- und Copolymerisate sind dem Fachmann bekannt und in der Literatur beschrieben.

Die bevorzugten Polyoxymethylencopolymere haben Schmelzpunkte von mindestens 140 °C, meist jedoch von mindestens 150 °C und Molekulargewichte (Gewichtsmittelwert) M_{w} im Bereich von 2.000 bis 1.000.000, vorzugsweise von 7.000 bis 150.000. Endgruppenstabilisierte Polyoxymethylenpolymerisate, die an den Kettenenden C-C-Bindungen aufweisen, werden besonders bevorzugt. Die eingesetzten Polyoxymethylenpolymere haben im allgemeinen einen Schmelzindex (MVR-Wert 190/2,16) von 0,3 bis 100 cm³/10 min (ISO 1133).

Besonders bevorzugt sind Polyoxymethylenpolymere, die im wesentlichen Oxymethylen- und Oxyethyleneinheiten in der Polymerkette aufweisen. Der Anteil der Oxyethyleneinheiten an den Struktureinheiten der Polymerkette beträgt 0.1 bis 15 mol %, vorzugsweise 0.2 bis 10 mol %. Der Schmelzindex MFI, gemessen nach ISO 1133 bei 190 °C und 2.16 kg Auflagegewicht, beträgt 0,5 -75 g/10 min, bevorzugt 2-60 g/10 min und besonders bevorzugt von 5-35 g/10 min. Das Zahlenmittel des Molekulargewichts beträgt mindestens 5000 g/mol und höchstens 100.000 g/mol, bestimmt durch Gelpermeationschromatographie (GPC) in Dimethylacetamid bei 150 bis 160 °C. An Stelle eines einzelnen Polyoxymethylencopolymerisats ist auch eine Mischung von verschiedenen, unterschiedlich zusammengesetzten Polyoxymethylen-Copolymeren verwendbar. Die Herstellung der Polyoxymethylencopolymere kann mit allgemein bekannten Herstellungsverfahren erfolgen. Ein mögliches Verfahren ist beispielsweise die Copolymerisation von Trioxan mit Dioxolan in Gegenwart allgemein üblicher Mengen von BF₃ und Methylal. Bevorzugt werden Polyoxymethylenpolymere, bei deren Herstellung Trifluormethansulfonsäure oder Bortrifluorid als Initiator verwendet wurden.

Die erfindungsgemäße Formmasse kann weitere übliche Zusatzstoffe einzeln oder als Gemisch bis zu 40 Gew. % enthalten, z.B. Ruße wie zum Beispiel Leitfähigkeitsruße, Säurefänger, Antioxidantien, UV-Stabilisatoren, Haftvermittler, Entformungshilfen, Stoffe zur Verbesserung der elektrischen Leitfähigkeit, Antistatika, Nukleierungsmittel wie Polyoxymethylen-Terpolymere oder Talk, Farbmittel wie anorganischer Pigmente, zum Beispiel Titandioxid, Ultramarinblau, Kobaltblau oder organische Pigmente und Farben wie Phthalocyanine, Anthrachinone, Füllstoffe wie Glaskugeln, Wollastonit, Kreide, Lehm, Molybdändisulfid oder Graphit, anorganische oder organische Fasern wie Glasfasern, Carbonfasern oder Aramidfasern, Gleitmittel wie Seifen und Ester, Stearylstearat, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether, Polytetrafluorethylen, ultrahochmolekulares Polyethylen, Paraffine fest und flüssig, Stearinsäuren und thermoplastische oder duroplastische Kunststoffadditive, Elastomere und weitere Polymere wie EPDM (Ethylen-Propylen-Dien-Kautschuk), EPM (Ethylen-Propylen-Kautschuke), Polyesterelastomere, Copolymere des Ethylens mit Estern von (Meth)acrylsäureestern und (Meth)acrylamiden Polymethylmethacrylat, Polyethylen, Polystyrol.

Als weiteren Zusatzstoff kann ein zyklischer Stabilisator, der mindestens ein Stickstoffatom in Ring enthält, enthalten sein. Beispiele sind Pyrrolidin, Piperidin, Pyrrol, Pyridin, Purin, Indol, Carbazol, Tryptophan, Oxazol, Imidazol, Thiazol, Picolin, Lutidin, Collidin, Chinolin, Pyridazin, Pyrimidin, Pyrazin und ihre Derivate. Vorteilhaft sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine sowie Pyrrolidon und davon abgeleitete Verbindungen und aus diesen Verbindungen hergestellte Mischungen. Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin. Die zyklischen Stabilisatoren, die mindestens ein Stickstoffatom im Ring enthalten, können einzeln oder in Kombination verwendet werden.

Vorteilhaft eingesetzt werden können außerdem 0.001-0.5 Gew.-% eines Metallsalzes einer Carbonsäure. Vorteilhaft sind Salze von Fettsäuren, insbesondere Salze von höheren Fettsäuren mit 10 - 32 Kohlenstoffatomen, bevorzugt 14- 32 Kohlenstoffatomen, besonders bevorzugt sind Salze der Montansäuren und Stearinsäure. Bevorzugte Metalle sind solche, die als ein- oder zweiwertige Ionen vorkommen, z.B. Alkali- und Erdalkalimetalle, insbesondere Erdalkalimetalle. Besonders bevorzugt sind Magnesium und Calcium, zum Beispiel Calciumstearat. Ganz besonders bevorzugt ist Magnesiumstearat.

Weiter vorteilhaft einsetzbar sind sterisch gehinderte Phenolverbindungen, die in Mengen von 0.0 bis 2.0 Gew. %, bevorzugt 0.1 bis 1.0 Gew.-%, besonders bevorzugt 0.2 bis 1.0 Gew.-%, eingesetzt werden können. Beispiele solcher Verbindungen sind Pentaerithrityl-tetrakis -[3-(3,5-di-tert.butyl-4-hydroxyphenyl)-propionat] (Irganox 1010, Firma Ciba Specialty Chemicals), Triethylenglykol-bis-[3-(3-tert.butyl-4-hydroxy-5-methylphenyl)-propionat] (Irganox 245, Firma Ciba Specialty Chemicals), 3,3'-bis[3-(3,5-di-tert.butyl-4-hydroxyphenyl)-propionohydrazid] (Irganox MD 1024, Firma Ciba Specialty Chemicals), Hexamethylenglykol-bis-[3-(3,5-di-tert.butyl-4-hydroxyphenyl)-propionat] (Irganox 259, Firma Ciba Specialty Chemicals), 3,5-di-tert.butyl-4-hydroxytoluol (Lowinox BHT, Firma Great Lakes). Bevorzugt sind Irganox 1010 und vor allem Irganox 245.

Außerdem können ein Stabilisator aus der Gruppe der Benzotriazolderivate oder Benzophenonderivate oder aromatischen Benzoatderivate in einer Menge von 0.0 - 1.0 Gew. %, bevorzugt 0.0 - 0.8 Gew. %. enthalten sein. Bevorzugt ist 2-[2'-Hydroxy-3',5'-bis(1,1-dimethylbenzyl)phenyl]-benzotriazol, das als Tinuvin 234 (Firma Ciba Specialty Chemicals) im Handel erhältlich ist.

Als weiterer Zusatzstoff außerdem vorteilhaft eingesetzt werden können in der erfindungsgemäßen Formmasse 0,01 - 0,8 Gew. %, bevorzugt 0,01 - 0,5 Gew.-%, ganz besonders bevorzugt 0,4 Gew.-% eines sterisch gehinderten Amins zur Lichtstabilisierung (HALS). Bevorzugt sind 2,2,6,6-tetramethyl-4-piperidyl-Verbindungen, z.B. Bis-(2,2,6,6-tetramethyl-4-piperidyl)-sebazat (Tinuvin 770, Firma Ciba Specialty Chemicals) oder das Polymer aus Bernsteinsäuredimethylester und 1-(2-Hydroxyethyl)-4-hydroxy-2,2,6,6-tetramethyl-4-piperidin (Tinuvin 622, Firma Ciba Specialty Chemicals).

Die erfindungsgemäßen Polyoxymethylen-Formmassen können mit den üblichen und bekannten Mischverfahren wie Granulieren, Extrusion, Kneten etc. hergestellt werden. Bevorzugt werden die erfindungsgemäßen Formmassen hergestellt, indem Polyoxymethylen Polymer mit Zusatzstoffen und Stabilisatoren vermischt und die Mischung anschließend granuliert wird.

Die erfindungsgemäßen Polyoxymethylen-Formmassen verfügen über wesentlich verbesserte mechanische Eigenschaften und eine geringe Formaldehydemission. Die Verminderung der Formaldehydfreisetzung kann schon bei der Herstellung der Formmasse, z.B. beim Granulieren, und auch bei der Verarbeitung beobachtet werden. Somit leistet die erfindungsgemäße Polyoxymethylen-Formmasse einen Beitrag zur Arbeitshygiene und -sicherheit.

Die mechanischen Eigenschaften der erfindungsgemäßen Formmassen übertreffen die meisten üblichen Anforderungen an Polyoxymethylen-Handelsprodukte, so dass die für Polyoxymethylen üblichen Anwendungsfelder und Verarbeitungstechniken ohne Einschränkung genutzt werden können. Die Schlagzähigkeiten sind wesentlich verbessert. Insbesondere die Kälteschlagzähigkeit wird durch die vorliegende Erfindung überraschend verbessert.

Besondere Anwendungsgebiete für die erfindungsgemäßen Formmassen sind Innenausstattungen und Verkleidungen von Verkehrsmitteln wie Automobile, Flugzeuge etc., Haushaltswaren, Spielzeugartikel, Babyartikel sowie elektronische und elektrotechnische Bauteile und Geräte. Besonders geeignet sind die erfindungsgemäßen Formmassen zur Herstellung von Apparaturen und Instrumenten, oder Teilen davon, für medizinische Anwendungen. Die erfindungsgemäß hergestellten Formmassen weisen im Vergleich zu den derzeit handelsüblichen Produkten die geringste Formaldehydemission auf, besitzen defektfreie Oberflächen und eine hohe Farbstabilität, wenn die Formteile Licht oder Hitze über lange Zeit ausgesetzt sind.

Auf sämtliche in dieser Patentanmeldung erwähnten Referenzen wird hiermit ausdrücklich Bezug genommen. Diese Referenzen sind damit Bestandteil der Offenbarung dieser Patentanmeldung.

### Beispiele

Die folgenden Beispiele sollen die Erfindung für den Fachmann illustrieren und weitere vorteilhafte Ausführungen offenbaren, ohne jedoch den Schutzumfang einzuschränken.

Als Basismaterial wurde das Polyoxymethylen-Copolymer Hostaform C 9021 von Ticona eingesetzt. Als weitere Hilfsstoffe wurden 0,45 Gew.-% einer Mischung enthaltend Wachs und Antioxidans eingesetzt.

Versuch 1 ist ein Vergleichsbeispiel. Die Beispiele gemäß der Erfindung sind die Versuche 2 bis 4. In Versuch 1 wurde kein Haftvermittler eingesetzt. In den Versuchen 2 und 3 wurde ein Ethylen-Glycidylmethacrylat-Methylacrylat-Terpolymer (E-GMA-MA, Lotader AX 8900, Atofina) eingesetzt. In Versuch 4 wurde ein Ethylen-Glycidylmethacrylat-Copolymer (E-GMA, Lotader AX 8840, Atofina) eingesetzt.

Die Mengen in der Tabelle sind in Gew.-% angegeben, Zugfestigkeit und Zug-Elastizitätsmodul in MPa, Bruchdehnung in %, Schlagzähigkeiten in kJ/m² und die Bruchenergien in J.

Die Bestandteile wurden vermengt und anschließend auf einem Extruder (Doppelschneckenextruder ZSK 25MC, Werner & Pfleiderer, Deutschland) bei 190°C Gehäusetemperatur extrudiert und granuliert.

Prüfkörperherstellung: Das Polyacetalgranulat wurde durch Spritzguss zu Normprüfkörpern verarbeitet und entsprechend den nachfolgend aufgeführten Methoden charakterisiert: Zugfestigkeit, Bruchdehnung, Zug-E-Modul wurden nach ISO 527 im Zugversuch ermittelt. Charpy Schlagzähigkeit wurde nach ISO 179-1/eU für ungekerbte Prüfkörper bzw. nach ISO 176-1/eA für eingekerbte Prüfkörper im Schlagzugversuch ermittelt. Die Bruchenergien wurden an Platten (80x80x2 mm) nach ISO 6603 (Teil 2) ermittelt.

Die Tabelle 1 enthält die Zusammensetzungen der Formmassen und die entsprechenden Prüfergebnisse.

Durch den Einsatz der reaktiven Haftvermittler konnten die schlagmechanischen Kennwerte, wie die Charpy Kerbschlagzähigkeit und noch signifikanter die Bruchenergie im instrumentalisierten Durchstoßversuch (biaxiale Schlagbelastung) insbesondere auch bei niedrigen Temperaturen (-30°C) verbessert werden. Daneben zeichnen sich die hergestellten Formmassen dadurch aus, dass die statisch-mechanischen Eigenschaften (Zugfestigkeit, Modul) sich nur minimal verringern. Die erzielbaren Duktilitäten (Bruchdehnung) sind ebenfalls verbessert.

**Tabelle 1**

| **Bestandteil / Eigenschaften** | **Einheit** | **1** | **2** | **3** | **4*** |
|---|---|---|---|---|---|
| Polyoxymethylene-Copolymer | Gew.-% | 89,5500 | 89,5500 | 89,5500 | 89,5500 |
| Zusatzstoffe | Gew.-% | 0,45 | 0,45 | 0,45 | 0,45 |
| TPU | Gew.-% | 10 | 9,5 | 9 | 9,5 |
| E-GMA-Copolymer | Gew.-% | | | | 0,5 |
| E-GMA-MA-Terpolymer | Gew.-% | | 0,5 | 1 | |
| MVR 190/2,16 | ml/10min | 7,2 | 7,3 | 7,4 | 7,3 |
| Zug-E-Modul | MPa | 2272 | 2135 | 2103 | 2094 |
| Zugfestigkeit | MPa | 55 | 53 | 52 | 52 |
| Bruchdehnung | % | 36 | 41 | 40 | 38 |
| Kerbschlagzähigkeit (Charpy, 23°C) | kJ/m² | 12,8 | 15,5 | 15,3 | 14,4 |
| Bruchenergie WS (2mm, 23°C) | J | 9,0 | 14,4 | 10,7 | 10,7 |
| Bruchenergie WS (2mm, -30°C) | J | 3,9 | 5,2 | 4,2 | 5,5 |

| | | | | | |
|---|---|---|---|---|---|
| * Vergleichsversuch | | | | | |

## Patentansprüche

1. Polyoxymethylen-Formmasse enthaltend
(A) 0,1 - 5,0 Gew. % eines Kompatibilisators,
(B) 5 - 50 Gew.-% eines Schlagzähmodifikators,
(C) ad 100 Gew. % eines Polyoxymethylen Polymeren,
wobei der Kompatibilisator. (A) eine Vielzahl von Grundeinheiten der folgenden Formeln aufweist
―(CH₂―CH₂)― (I)
und 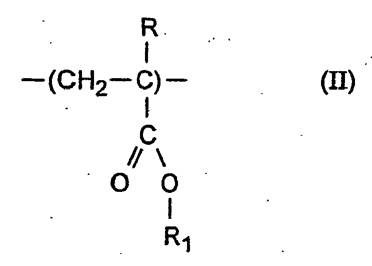 und 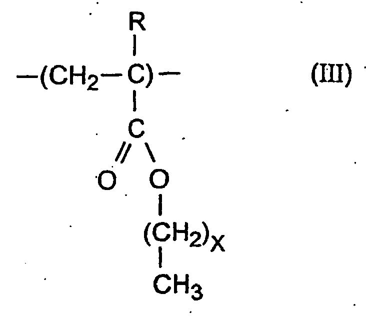 und gegebenenfalls 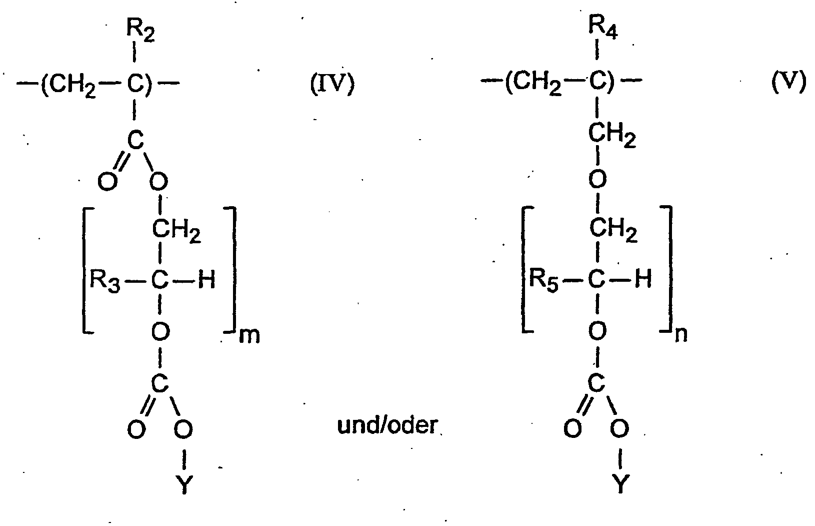 in denen R und R₂ ein Wasserstoffatom oder eine Alkylgruppe mit 1 oder 2 Kohlenstoffatomen bezeichnen,
R₁= 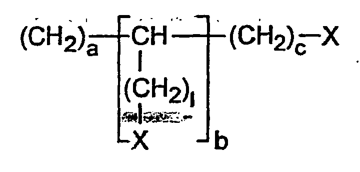 wobei X CH₃ oder 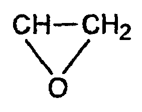 bedeuten und mindestens ein X steht für 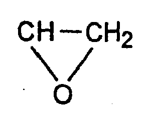 mit
a einer Zahl von 1 bis 10
b gleich 0 oder 1,
c einer Zahl von 0 bis 10,
l einer Zahl von 0 bis 10, ist
R₃, R₅ ein Wasserstoffatom oder eine Methylgruppe,
R₄ ein Wasserstoffatom oder eine Alkylgruppe mit 1 bis 4 Kohlenstoffatomen,
m 1 oder 2,
n 0 oder 1 oder 2,
x einer Zahl von 0 bis 10,
Y H oder 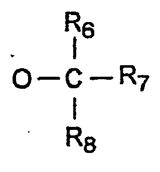 ist, wobei
R₆, R₇, gleich oder verschieden, für-eine Alkylgruppe mit 1 bis 4 Kohlenstoffatomen stehen, R₈ eine Alkylgruppe mit 1 bis 12 Kohlenstoffatomen, Phenyl, Alkylphenyl oder Cycloalkyl mit 3 bis Kohlenstoffatomen
oder 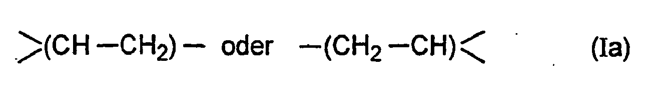 oder 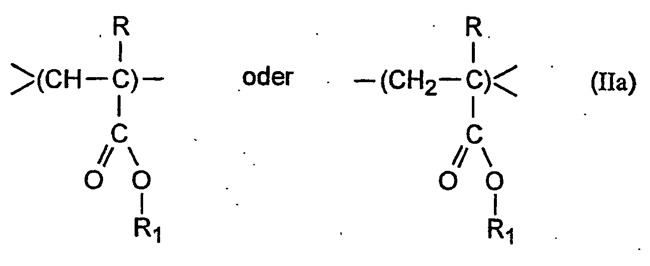 oder 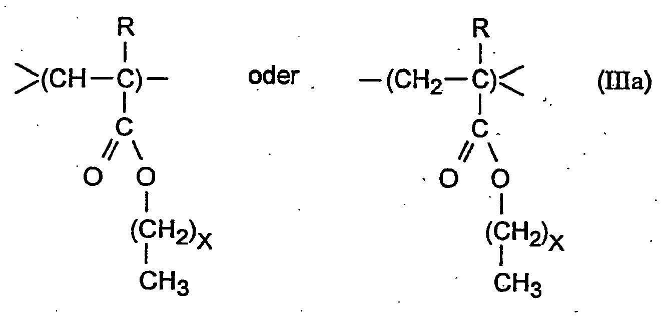 oder 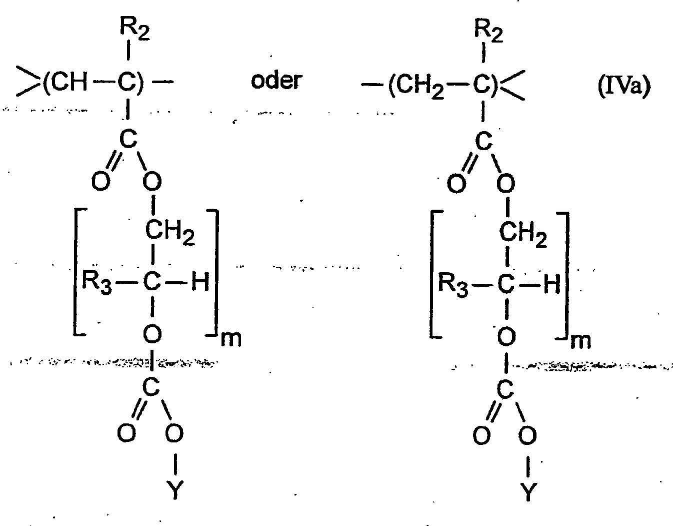 oder 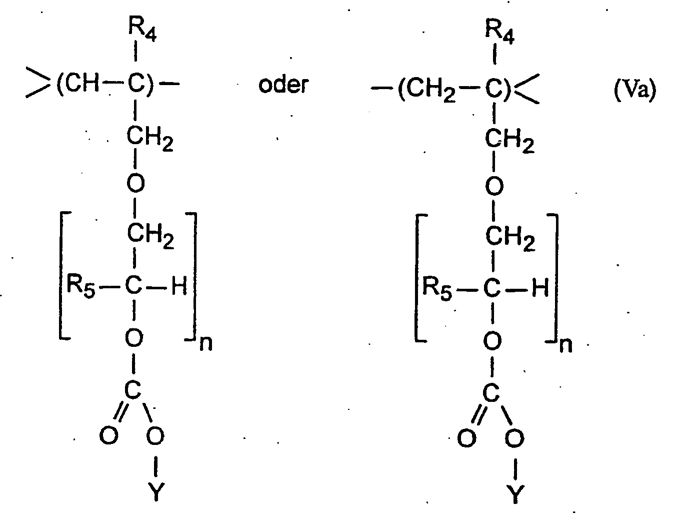 bedeutet,
wobei die Grundeinheiten der Formeln (Ia), (IIa), (IIIa), (IVa) und (Va) an Grundeinheiten der Formeln (I), (II), (III), (IV) oder (V) gebunden sein können, und wobei der Kompatibilisätor
- 29 bis 70 Gew.-% Grundeinheit der Formel (I)
- 0,5 bis 30 Gew.-% Grundeinheit der Formel (II)
- 10 bis 70 Gew.-% Grundeinheit der Formel (III)
- und 0 bis 10 Gew.-% Grundeinheiten der Formel (IV) und/oder (V)
enthält.

2. Polyoxymethylen-Formmasse gemäß Anspruch 1 enthaltend
(A) 0,2 - 2 Gew. % eines Kompatibilisators,
(B) 5 - 40 Gew.-% eines Schlagzähmodifikators,
(C) ad 100 Gew. % eines Polyoxymethylen Polymeren.

3. Polyoxymethylen-Formmasse gemäß Anspruch 1 enthaltend
(A) 0,3 - 0,6 Gew. % eines Kompatibilisators,
(B) 7 - 30 Gew.-% eines Schlagzähmodifikators,
(C)ad 100 Gew. % eines Polyoxymethylen Polymeren.

4. Polyoxymethylen-Formmasse nach einem oder mehreren der vorstehenden Ansprüche, **dadurch gekennzeichnet, dass** der Kompatibilisator ein Molekulargewicht zwischen 5000 und 10⁸ aufweist.

5. Polyoxymethylen-Formmasse nach einem oder mehreren der vorstehenden Ansprüche, **dadurch gekennzeichnet, dass** der Kompatibilisator ein Molekulargewicht zwischen 10⁴ und 10⁶ aufweist.

6. Polyoxymethylen-Formmasse nach einem oder mehreren der vorstehenden Ansprüche, wobei die Komponente (B) ein Polyurethan, eine zweiphasige Mischungen aus Polybutadien und Styrol/Acrylnitril (ABS), modifizierte Polysiloxane bzw. Silicon-Kautschuke oder Pfropfcopolymere aus einem kautschukelastischen, einphasigen Kern auf Basis von Polydien und einer harten Pfropfhülle in feiner Verteilung enthält.

7. Polyoxymethylen-Formmasse nach einem oder mehreren der vorstehenden Ansprüche, wobei die Komponente (B) Pfropfcopolymere aus einem kautschukelastischen, einphasigen Kern auf Basis von Polydien und einer harten Pfropfhülle enthält, die Hülle der Partikel ein- oder zweischalig ausgebildet ist, bei einschaligen Partikeln aus Poly(meth)acrylat und Poly(meth)acrylnitril besteht, bei zweischaligen Partikeln die innere Schale aus vemetztem Polystyrol und die äußere Schale aus vernetzten Polymethacrylat besteht.

8. Polyoxymethylen-Formmasse nach einem oder mehreren der vorstehenden Ansprüche, wobei die Komponente (C), das Polyoxymethylenpolymer, unter Verwendung von Trifluormethansulfonsäure oder Bortrifluorid als Initiator hergestellt wurde.

9. Verwendung der thermoplastischen Formmasse nach einem oder mehreren der Ansprüche 1 bis 8 zur Herstellung.von Formkörpern und Folien.

10. Formkörper, hergestellt aus einer thermoplastischen Formmasse nach einem oder mehreren der Anspruche 1 bis 8.

## Claims

1. A polyoxymethylene molding composition comprising
(A) from 0.1 to 5.0% by weight of a compatibilizer,
(B) from 5 to 50% by weight of an impact modifier,
(C) the remainder to 100% by weight of a polyoxymethylene,
where the compatibilizer (A) contains many underlying units of the following formulae:
-(CH₂-CH₂)- (I)
and 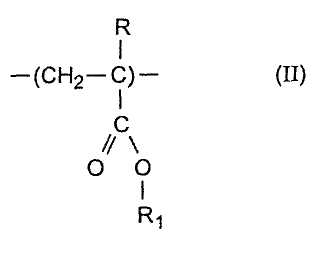 and 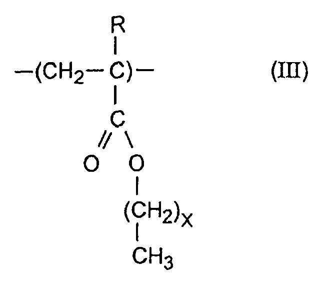 and, where appropriate, 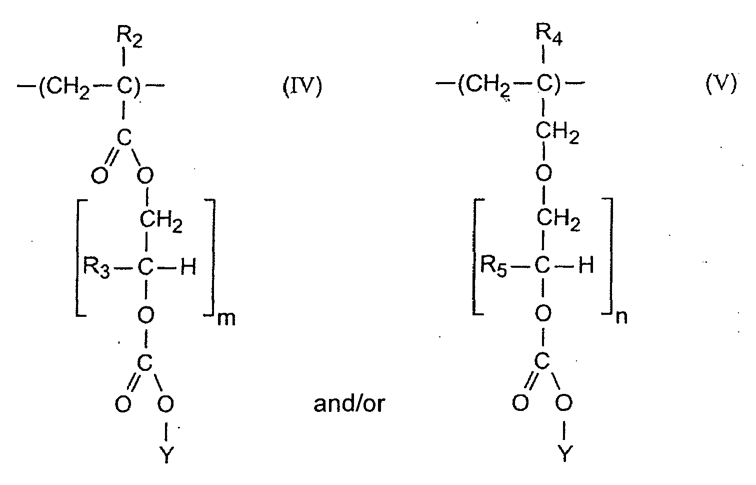 where R and R₂ are a hydrogen atom or an alkyl group having 1 or 2 carbon atoms,
R₁ = 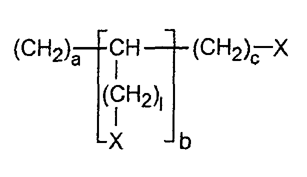 and where X is CH₃ or 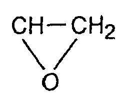 and at least one X is 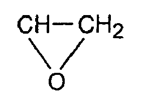 and where
a is a number from 1 to 10,
b is 0 or 1,
c is a number from 0 to 10,
l is a number from 0 to 10,
R₃, R₅ are a hydrogen atom or a methyl group,
R₄ is a hydrogen atom or an alkyl group having from 1 to 4 carbon atoms,
m is 1 or 2,
n is 0 or 1 or 2,
x is an integer from 0 to 10,
Y is H or 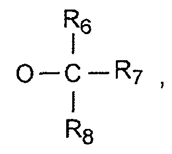 where
R₆, R₇ are identical or different and are an alkyl group having from 1 to 4 carbon atoms,
R₈ is an alkyl group having from 1 to 12 carbon atoms, phenyl, alkylphenyl or cycloalkyl having from 3 to 12 carbon atoms
or 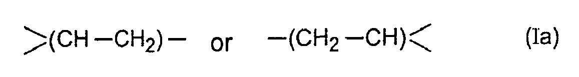 or 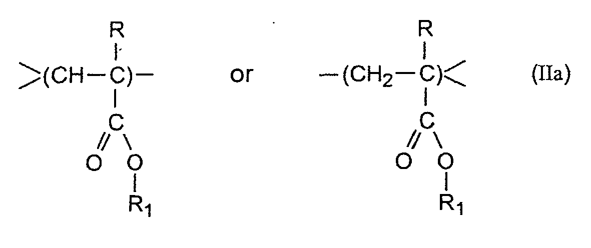 or 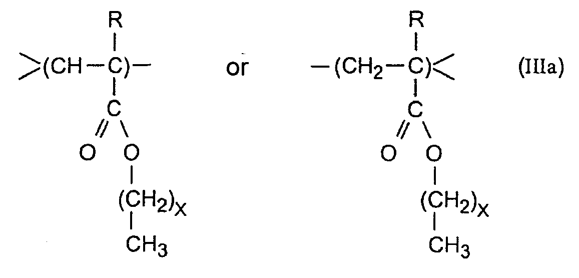 or 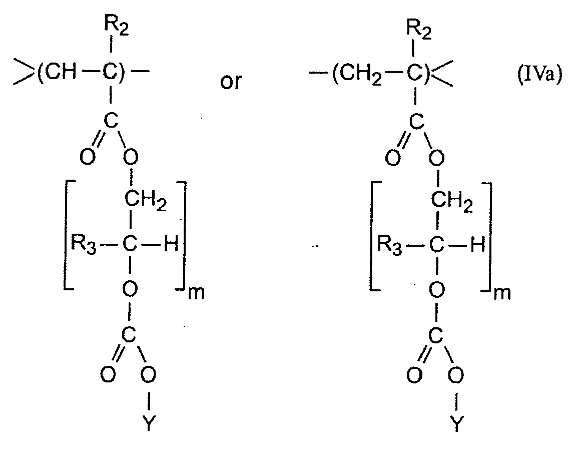 or 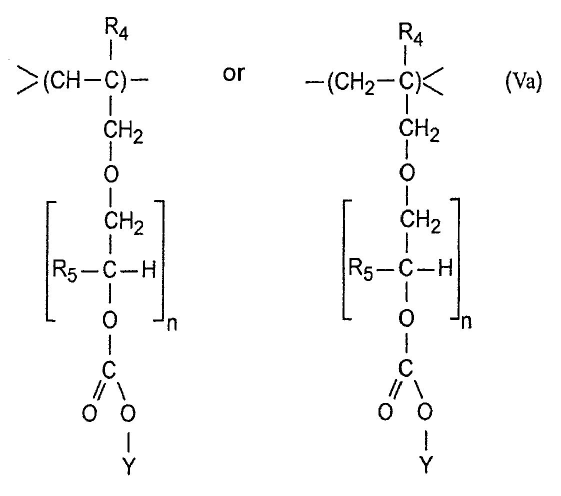 where the underlying units of the formulae (Ia), (IIa), (IIIa), (IVa) and (Va) may have bonding to underlying units of the formulae (I), (II), (III), (IV), or (V), and the compatibilizer comprises
• from 29 to 70% by weight of underlying unit of the formula (I)
• from 0.5 to 30% by weight of underlying unit of the formula (II)
• from 10 to 70% by weight of underlying unit of the formula (III)
• and from 0 to 10% by weight of underlying units of the formula (IV) and/or (V).

2. The polyoxymethylene molding composition as claimed in claim 1, comprising
(A) from 0.2 to 2% by weight of a compatibilizer,
(B) from 5 to 40% by weight of an impact modifier,
(C) the remainder to 100% by weight of a polyoxymethylene.

3. The polyoxymethylene molding composition as claimed in claim 1, comprising
(A) from 0.3 to 0.6% by weight of a compatibilizer,
(B) from 7 to 30% by weight of an impact modifier,
(C)the remainder to 100% by weight of a polyoxymethylene.

4. The polyoxymethylene molding composition as claimed in one or more of the preceding claims, wherein the compatibilizer has a molecular weight of from 5000 to 10⁸.

5. The polyoxymethylene molding composition as claimed in one or more of the preceding claims, wherein the compatibilizer has a molecular weight of from 10⁴ to 10⁶.

6. The polyoxymethylene molding composition as claimed in one or more of the preceding claims, where component (B) comprises a polyurethane or a two-phase mixture of polybutadiene and styreneacrylonitrile (ABS), or comprises modified polysiloxanes or, respectively, silicone rubbers, or graft copolymers made from an elastomeric, single-phase core based on polydiene and a hard graft shell, with fine distribution.

7. The polyoxymethylene molding composition as claimed in one or more of the preceding claims, where component (B) comprises graft polymers made from an elastomeric, single-phase core based on polydiene and a hard graft shell, the shell of the particles having one or two subshells, where in the case of particles having one subshell the shell is composed of poly(meth)acrylate and poly(meth)-acrylonitrile, and in the case of particles having two subshells the inner subshell is composed of crosslinked polystyrene and the outer subshell is composed of crosslinked polymethacrylate.

8. The polyoxymethylene molding composition as claimed in one or more of the preceding claims, where component (C), the polyoxymethylene, has been prepared using trifluoromethanesulfonic acid or boron trifluoride as initiator.

9. The use of the thermoplastic molding composition as claimed in one or more of claims 1 to 8 for producing moldings or films.

10. A molding produced from a thermoplastic molding composition as claimed in one or more of claims 1 to 8.

## Revendications

1. Composition à mouler en polyoxyméthylène comprenant
(A) de 0,1 à 5,0 % en poids d'un agent de compatibilisation,
(B) de 5 à 50 % en poids d'un modificateur de la résilience,
(C) le reste jusqu'à 100 % en poids d'un polymère polyoxyméthylène,
où l'agent de compatibilisation (A) renferme un grand nombre de motifs de base de formules suivantes :
―(CH₂―CH₂)― (I)
et 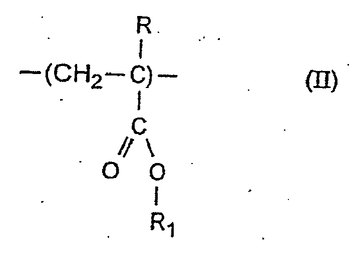 et 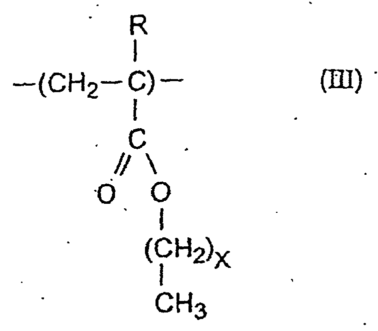 et éventuellement 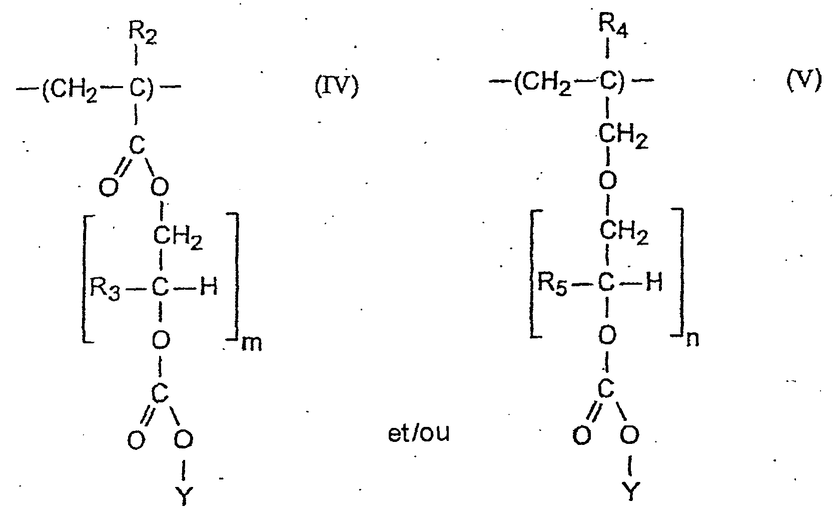 dans lesquelles R et R₂ représentent un atome d'hydrogène ou un groupe alkyle renfermant 1 ou 2 atomes de carbone,
R₁= 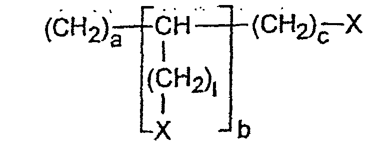 où X représente un groupe CH₃ ou un groupe 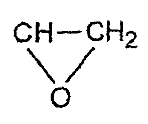 et au moins un X représente un groupe 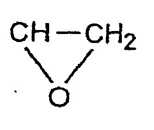 où
a représente un nombre de 1 à 10,
b vaut 0 ou 1,
c représente un nombre de 0 à 10,
l représente un nombre de 0 à 10,
R₃, R₅ représentent un atome d'hydrogène ou un groupe méthyle,
R₄ représente un atome d'hydrogène ou un groupe alkyle renfermant de 1 à 4 atomes de carbone,
m vaut 1 ou 2,
n vaut 0 ou 1 ou 2,
x représente un nombre de 0 à 10,
Y représente un atome d'hydrogène ou un groupe 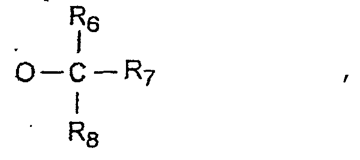 où
R₆, R₇, identiques ou différents, représentent un groupe alkyle renfermant de 1 à 4 atomes de carbone, R₈ représente un groupe alkyle renfermant de 1 à 12 atomes de carbone, un groupe phényle, un groupe alkylphényle ou un groupe cycloalkyle renfermant de 3 à 12 atomes de carbone,
ou 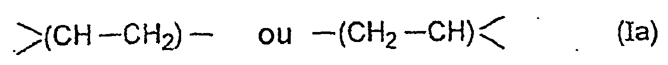 ou 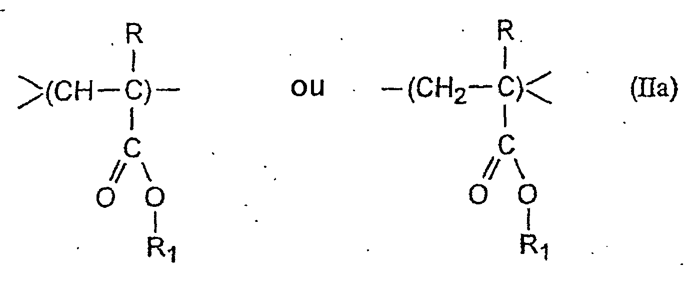 ou 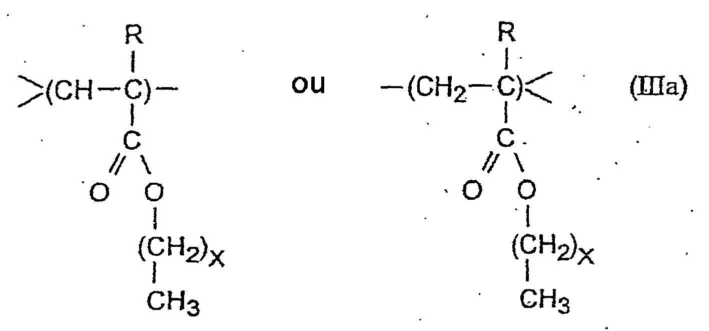 ou 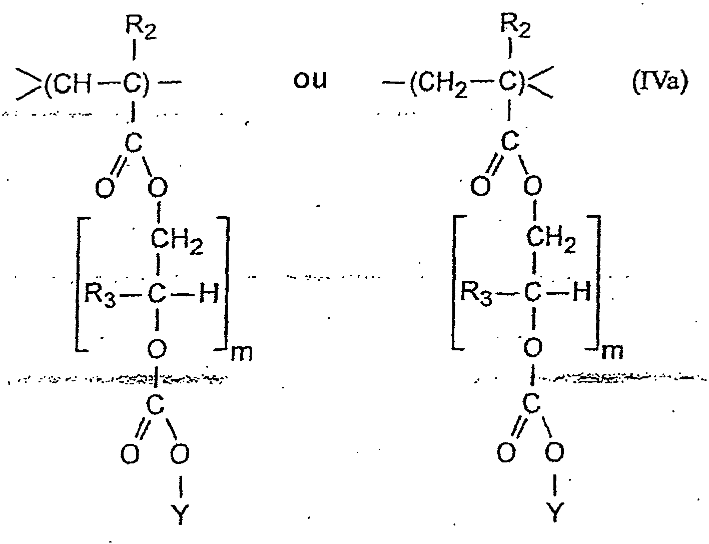 ou 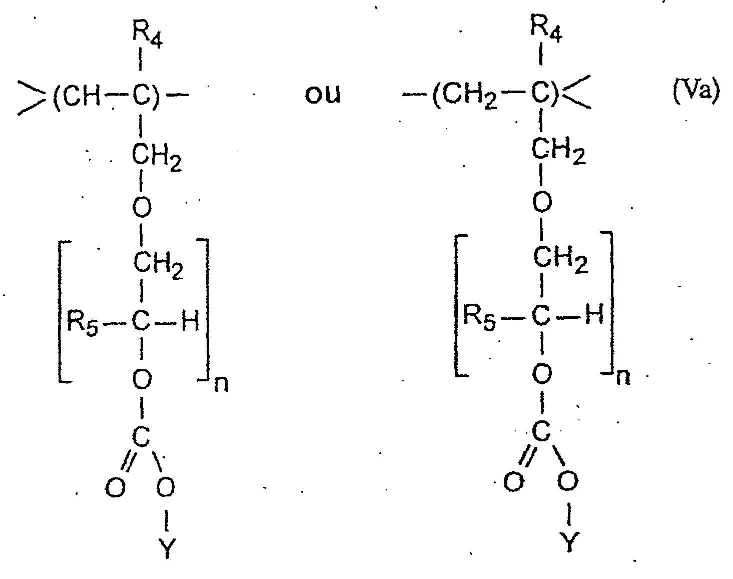 où les motifs de base de formules (Ia), (IIa), (IIIa), (IVa) et (Va) peuvent être liés à des motifs de base de formules (I), (II), (III), (IV) ou (V), et où l'agent de compatibilisation comprend
- de 29 à 70 % en poids de motif de base de formule (I),
- de 0,5 à 30 % en poids de motif de base de formule (II),
- de 10 à 70 % en poids de motif de base de formule (III),
- et de 0 à 10 % en poids de motifs de base de formules (IV) et/ou (V).

2. Composition à mouler en polyoxyméthylène selon la revendication 1, comprenant
(A) de 0,2 à 2 % en poids d'un agent de compatibilisation,
(B) de 5 à 40 % en poids d'un modificateur de la résilience,
(C) le reste jusqu' à 100 % en poids d'un polymère polyoxyméthylène.

3. Composition à mouler en polyoxyméthylène selon la revendication 1, comprenant
(A) de 0,3 à 0,6 % en poids d'un agent de compatibilisation,
(B) de 7 à 30 % en poids d'un modificateur de la résilience,
(C) le reste jusqu'à 100 % en poids d'un polymère polyoxyméthylène.

4. Composition à mouler en polyoxyméthylène selon l'une ou plusieurs des revendications précédentes, **caractérisée en ce que** l'agent de compatibilisation présente un poids moléculaire compris entre 5000 et 10⁸.

5. Composition à mouler en polyoxyméthylène selon l'une ou plusieurs des revendications précédentes, **caractérisée en ce que** l'agent de compatibilisation présente un poids moléculaire compris entre 10⁴ et 10⁶.

6. Composition à mouler en polyoxyméthylène selon l'une ou plusieurs des revendications précédentes, dans laquelle le composant (B) comprend un polyuréthane, un mélange biphasique de polybutadiène et de styrène/acrylonitrile (ABS), des polysiloxanes modifiés ou des caoutchoucs siliconés, ou des copolymères greffés composés d'un coeur monophasique élastomère à base de polydiène et d'une enveloppe greffée dure en une fine distribution.

7. Composition à mouler en polyoxyméthylène selon l'une ou plusieurs des revendications précédentes, dans laquelle le composant (B) comprend des polymères greffés composés d'un coeur monophasique élastomère à base de polydiène et d'une enveloppe greffée dure, l'enveloppe des particules est formée d'une ou de deux coques, laquelle est composée, dans le cas de particules à une coque, de poly(méth)acrylate et de poly(méth)acrylonitrile, et dans le cas de particules à deux coques, la coque interne est composée de polystyrène réticulé et la coque externe est composée de polyméthacrylate réticulé.

8. Composition à mouler en polyoxyméthylène selon l'une ou plusieurs des revendications précédentes, dans laquelle le composant (C), à savoir le polymère polyoxyméthylène, a été préparé en utilisant de l'acide trifluorométhanesulfonique ou du trifluorure de bore.

9. Utilisation de la composition à mouler thermoplastique selon l'une ou plusieurs des revendications 1 à 8, pour la production de corps moulés et de feuilles.

10. Corps moulé produit à partir d'une composition à mouler thermoplastique selon l'une ou plusieurs des revendications 1 à 8.
